# EUROPEAN PATENT APPLICATION

(11) **EP 2 429 209 A2**
(43) Date of publication of application: **14.03.2012**
(21) Application number: 11180052.0
(22) Date of filing: 05.09.2011
(51) Int. Cl.: H04N 21/258, H04N 13/04, H04N 21/2347

(54) **Apparatus and method for providing stereoscopic image contents**

(30) Priority: 14.09.2010 KR 20100090099; 24.08.2011 KR 20110084255
(71) Applicant: LG Electronics, Seoul, 150-721 (KR)
(72) Inventor: Ahn, Mooki, 137-724 SEOUL (KR)
(74) Representative: Cabinet Plasseraud

(57) **Abstract**

The present invention relates to a method of providing stereoscopic image contents, and the method includes receiving partially encrypted stereoscopic image data from the content provider; performing a user authentication for providing stereoscopic image; decrypting the encrypted part of the stereoscopic image data based on the result of the performed user authentication; and displaying stereoscopic image by using the stereoscopic image data including the decrypted part.

## Description

### CROSS REFERENCE TO RELATED APPLICATION

This application claims the benefit of Korean Patent Application Nos. 10-2010-0090099 (filed on 14, September, 2010) and 10-2011-0084255 (filed on 24, August, 2011) entitled "Apparatus and method for providing stereoscopic image contents", which are hereby incorporated by reference in its entirety into this application.

### BACKGROUND OF THE INVENTION

### 1. Technical Field

The present invention relates an apparatus and method for providing stereoscopic image contents using stereoscopic image data received from a contents provider.

### 2. Description of the Related Art

In recent years, the opportunities more easily capable of obtaining desired materials can be provided due to the development of Internet and the digitization of a variety of contents compared with the previous art. On the other hand, the needs for content protection technologies have increased according to the rapid increasing of paltrier contents providers due to replications and distribution. Therefore, according to the needs described above, technologies and services regarding digital rights management (hereafter, refer to DRM) to protect, secure and manage digital contents have developed. That is, such the technologies and services can provide to prevent distributed digital contents from unauthorized use and consistently protect and mange rights and interests of related authors and license owners to be obtained according to the protected contents.

In particular, according to a commercial scale of contents provided as stereoscopic image, the users can obtain effects encountering similar images in more actual shape by enjoying contents including stereoscopic image as well as watching conventional planar images.

However, methods of providing the contents regarding stereoscopic image are not normalized so far and apparatuses for reproducing the contents including stereoscopic image are not generalized. Therefore, two-dimensional (2D) contents and three-dimensional (3D) contents can not be stored or transmitted through a media without classifying the two-dimensional and three-dimensional content users. Accordingly, a step-by-step transfer method, which stores two-dimensional contents in the media and transfers to customers who wish to use two-dimensional contents and which stores the three-dimensional contents in the media and transfers to customers who wish to use the three-dimensional contents, is required.

### SUMMARY OF THE INVENTION

The present invention is intended to solve the problems, and an object of the present invention is to provide an apparatus and a method for providing stereoscopic image to allow the users to optionally use contents including stereoscopic image.

To achieve the above object, a method of providing stereoscopic image according to an embodiment of the present invention includes providing stereoscopic image by using data received from a contents provider and receiving the stereoscopic image data partially encrypted from the contents provider, performing a user authentication for providing the stereoscopic image, decrypting the encrypted part of the stereoscopic image data based on the results of the performed user authentication, and displaying the stereoscopic image including the decrypted part by using the stereoscopic image data.

In addition, an apparatus of providing stereoscopic image according to an embodiment of the present invention includes a date transceiver unit for receiving stereoscopic image data partially encrypted from the contents provider and transmitting a user authentication data, a memory unit for storing the received stereoscopic image data, a decoder unit decrypting the encrypted part of the stereoscopic image data based on the results of a performed user authentication by using the transmitted user authentication flag data, and a display unit for displaying the stereoscopic image by using the stereoscopic image data including the decrypted part.

The method for providing stereoscopic image may be implemented with a computer readable recording medium recorded thereon a program executed by a computer.

### BRIEF DESCRIPTION OF THE DRAWINGS

FIG. 1 is a block diagram showing a configuration of a contents provision system.
FIG. 2 is a block diagram showing the configuration of a content reproducing apparatus according to an embodiment of the present invention.
FIG. 3 is a flow chart showing a content provision method according to an embodiment of the present invention.
FIG. 4 is a flowchart showing a first embodiment of a method for providing 3D stereoscopic image contents according to present invention.
FIG. 5 is a diagram showing the first embodiment of the configuration of stereoscopic image data received from a content provider.
FIG. 6 is a diagram showing the first embodiment of the configuration of a decrypted stereoscopic image data.
FIG. 7 is a diagram showing a second embodiment of the configuration of stereoscopic image data received from a content provider.
FIG. 8 is a diagram showing the second embodiment of the configuration of a decrypted stereoscopic image data.
FIGS. 9 to 14 are diagrams showing the first embodiment of a method for displaying 3D stereoscopic image by using stereoscopic image data received from a content provider.
FIGS. 15 to 17 are diagrams showing the second embodiment of a method for displaying 3D stereoscopic image by using stereoscopic image data received from a content provider.
FIGS. 18 to 19 are diagrams showing an embodiment of a method for providing a preview regarding 3D stereoscopic image.
FIGS. 20 to 21 are diagrams showing embodiments of a method for providing 3D stereoscopic image when switching a channel.

### DESCRIPTION OF THE PREFERRED EMBODIMENTS

Hereinafter, the preferred embodiments of the present invention will be described with reference to accompanying drawings in detail.

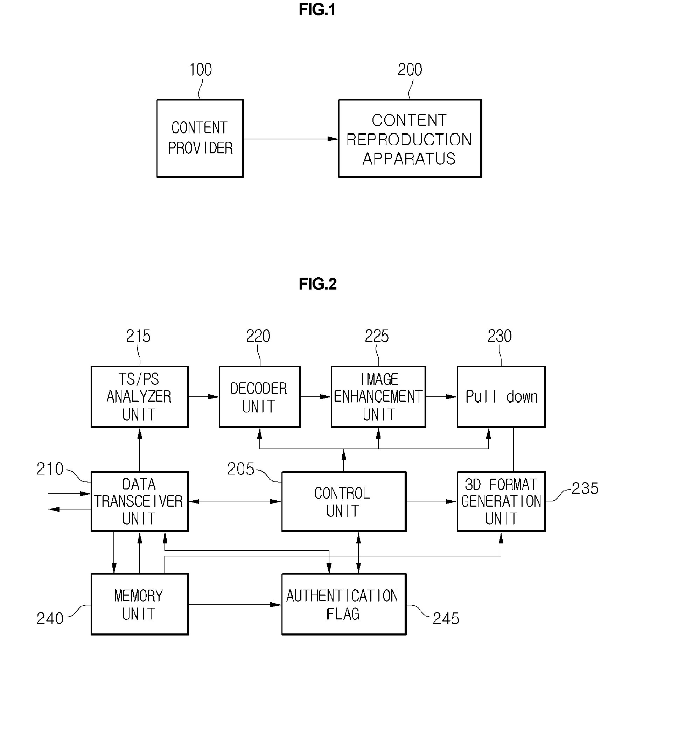

FIG. 1 is a block diagram showing a configuration of a content provision system, and the content provision system may by configured to include a content provider 100 and content reproduction apparatus 200.

Referring to FIG. 1, the content provider 100 stores information about an apparatus for reproducing stereoscopic image or information about a user in a database. The information regarding the user includes the user authentication information (for example, passwords, IDs, etc).

The content provider 100 transmits an encrypted image data including left eye and right eye images to configure stereoscopic image by a user request to the content reproduction apparatus 200. The stereoscopic image may be displayed by analyzing pre-stored user information and by decrypted the encrypted image data when requesting the user authentication through the content reproduction apparatus 200.

The content reproduction apparatus 200 performs functions displaying image data received from the content provider 100 by the two or three-dimensions.

FIG. 2 is a block diagram showing the configuration of a content reproducing apparatus according to an embodiment of the present invention and the content reproduction apparatus may includes a control unit 205, a data transceiver unit 210, a TS/PS analyzer unit 215, a decoder unit 220, an image enhancement unit 225, a pull-down processing unit 230, a 3D format generation unit 235, a memory unit 240 and an authentication flag 245.

Referring to FIG. 2, the content reproduction apparatus 200 to which the embodiment of the present invention is applied receives left eye and right eye images to configure the stereoscopic image from the content provider 100 through the data transceiver unit 210, and any one of the received images is encrypted. Therefore, the content reproduction apparatus 200 may display the stereoscopic image by decrypting the encrypted image based on the results of the user authentication by the user request.

The data transceiver unit 210 performs functions of receiving the stereoscopic image data, transmitting the authentication request signal based on the user authentication request to the content provider 100 and accordingly receiving a response signal of authentication or not.

The data transceiver unit 210 generates transport streams or packetized streams by loading the image data from the content provider 100. The generated transport stream is transmitted to TS/PS analyzer unit 215. The TS/PS analyzer unit 215 generates an elementary stream (ES) including both image information and audio information by performing filtering and parsing processes for filtering wanted packets to be reproduced for the transport stream.

The elementary stream output from the TS/PS analyzer unit 215 is decoded in the decoder unit 220 suited to a corresponding codec to output image frames. A decoding of audio information is also achieved in the decoder unit 220.

Also, it is possible to change the codec signal in the decoder unit 220 by the user's selection. That is, it is possible to change a codec applied to the decoding by the user' selection input through input buttons or remote controller.

Meanwhile, in an apparatus for reproducing the stereoscopic image by using a multi-view video codec (MVC), an image data transmitted as a stream so far is divided into left/right images and transmitted to the image enhancement unit 225 by adding a demultiplexer function to an output part of the decoder unit 220. At this time, the left eye image and the right eye image are synchronized with time stamp information.

In particular, in the embodiment of the present invention, since any one of images of state divided into the left/ right images is encrypted state, a de-interlacing or image enhancement processing of the image frame may pre-performs in the image enhancement unit 225 for only image of the unencrypted state.

In a two-dimensional image reproduction apparatus, the image frames output from the image enhancement unit 225 may be transmitted to a transfer data generation unit, and if necessary, overlaid with other image or re-formatted into a form that is sent to an image display apparatus such as TV or the like and directly transmitted to display unit (not shown).

On the other hand, stereoscopic image output from the content reproduction apparatus 200 according to the embodiment of the present invention is transmitted to 3D format generation unit 235 which performs three-dimensional image format after being processed in the image enhancement unit 225 and the pull-down processing unit 230. In addition, the 3D format generation unit 235 does not performs format converting the received image data into stereoscopic image before processing the user authentication, and the unencrypted image is output image data formatted into a planar image, that is, a two-dimensional image to a display unit (not shown).

The memory unit 240 performs functions which receives the encrypted stereoscopic image data received through the data transceiver unit 210 according to the embodiment of the present invention and stores the user authentication information for decrypt the encrypted stereoscopic image data.

In addition, the memory unit 240 performs function which temporarily stores the encrypted data of left eye image or right eye image to configure the stereoscopic image for outputting the image data of a two-dimensional or three-dimensional image based on the user authentication or not.

The authentication flag 245 receives or generates data required in the user authentication when requesting the user authentication to the content provider 100 and transmits the generated user authentication data to the content provider 100 through the data transceiver unit 210.

The control unit 205 performs functions to control such that the encrypted stereoscopic image data received to the data transceiver unit 210 is received the user authentication request signal is transmitted to the content provider 100 and the encrypted stereoscopic image data is decrypted based on the user authentication or not, according to the embodiment of the present invention.

As described with reference to FIGS. 1 and 2, the content reproduction apparatus 200 according to the embodiment of the present invention may receive partially encrypted stereoscopic image data from the content provider 100 and display the stereoscopic image after decrypting the encrypted part of the stereoscopic image data.

In addition, according to the embodiment, the content reproduction apparatus 200 may perform the user authentication for reproducing the stereoscopic image through the decryption of the encrypted part.

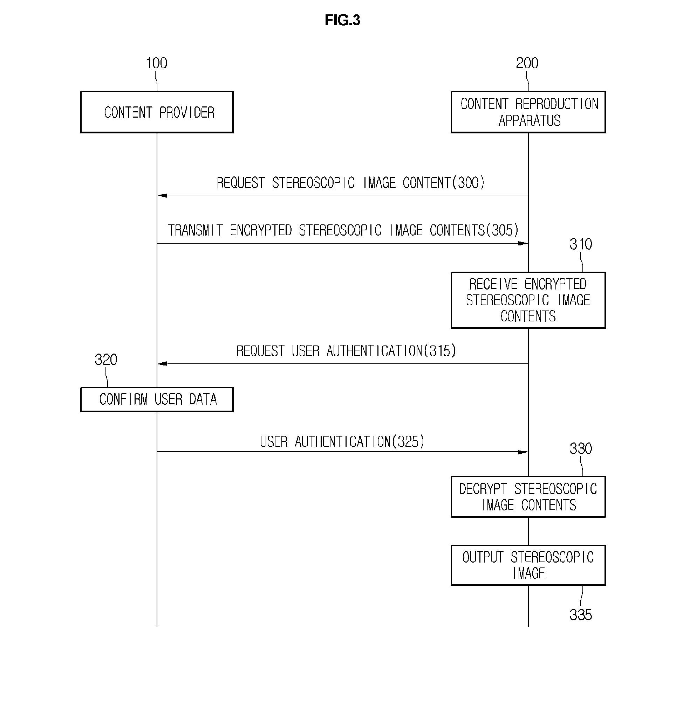

Hereinafter, referring to FIGS. 3 to 21, the method for providing the stereoscopic image according to the present invention will be described in detail.

FIG. 3 is a flow chart showing a method for providing contents according to an embodiment of the present invention.

Referring to FIG. 3, the content reproduction apparatus 200 requests the stereoscopic image contents to the content provider 100 (S300), and the content provider 100 transmits the stereoscopic image content data to the content reproduction apparatus (S305).

Meanwhile, the stereoscopic image data transmitted from the content provider 100 may be partially encrypted, that is, a part of the stereoscopic image data may be encrypted and the rest may be not encrypted.

For example, the stereoscopic image data may include left eye image data and right eye image data each corresponding to left eye image and right eye image to configure the stereoscopic image, and any one of the left eye image data and the right eye image data is transmitted from the content provider 100 in an encrypted state.

In addition, the stereoscopic image data may include 2D image data and additional information (for example, depth information) for displaying the stereoscopic image by using the 2D image data, and the content provider 100 may transmit by encrypting the additional information.

The content reproduction apparatus 200 receives the partially encrypted stereoscopic image content data as described above (S310).

Next, the content reproduction apparatus 200 may transmit the user authentication request signal to the content provider 100 (S315). For example, when transmitting the user authentication request signal, the content reproduction apparatus 200 may transmit to the content provider 100 the user information including the user ID and password or the like.

The content provider 100 performs the user authentication by confirming data including the user information received from the content reproduction apparatus 200 and comparing the received user data with a pre-stored user authentication data (S320).

After completing the user authentication by the content provider 100, when a signal indicating the result of the user authentication is transmitted to the content reproduction apparatus 200 (S325), the content reproduction apparatus 200 decrypts the encrypted part of the stereoscopic image data (S330).

Next, the content reproduction apparatus 200 displays the stereoscopic image by using the stereoscopic image data including the decrypted part (S335).

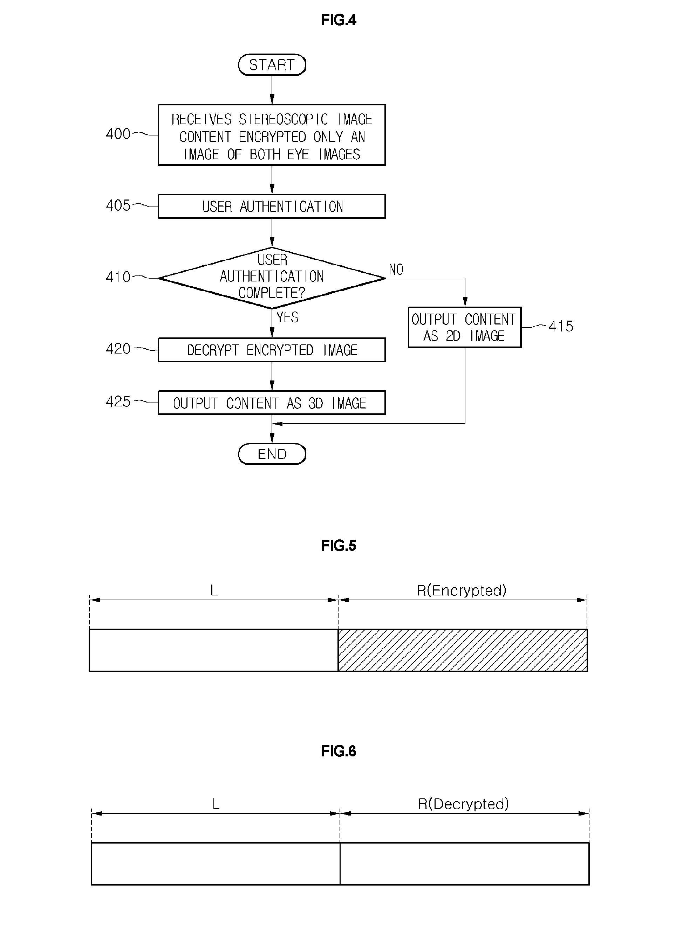

FIG. 4 is a flowchart showing a first embodiment of a method for providing 3D stereoscopic image contents according to present invention, and the method for providing 3D stereoscopic image contents will be described by associating the block diagram showing the configuration of a content reproduction apparatus according to an embodiment of the present invention shown in FIG. 2.

Referring to FIG. 4, the data transceiver unit 210 of the content reproduction apparatus 200 receives from the content provider 100 the stereoscopic image content data in which only an image of both eye images which configure the stereoscopic image is encrypted (S400).

For example, as shown in FIG. 5, the stereoscopic image data received from the content provider 100 includes the left image data L and the right image data R, and the right eye image data R of two image data may be encrypted.

In this case, a display unit (not shown) of the content reproduction apparatus 200 may displays the two-dimensional image by the left eye image data L which is the unencrypted image data of the stereoscopic image data received from the content provider 100.

Meanwhile, when the user wants to watch the stereoscopic image, the content reproduction apparatus 200 performs the required user authentication to provide as 3D image the contents received from the content provider 100 through the authentication flag 245 (S405).

For example, the content reproduction apparatus 200 receives from the user the user' ID and password for the user authentication and transmits a user authentication request signal including the user information of the input user' ID and password to the content provider 100 so as to achieve the user authentication.

As a result of the user authentication, when the user authentication is not successfully completed (S410), the contents of the two-dimensional image are output by using the unencrypted part of the stereoscopic image data (S415).

For example, when the user' ID or password input by the user is not stored or registered in the content provider 100, since a fee for watching the stereoscopic image can not be charged, the content provider 100 transmits to the content reproduction apparatus 200 a user authentication result signal indicating that the user authentication has failed.

In this case, the content reproduction apparatus 200 may displays the two-dimensional image by using the unencrypted image data, for example, the left eye image data L as shown in FIG. 5, of the stereoscopic image data received from the content provider 100.

Meanwhile, when the user authentication has successfully been completed (S410), the decoder unit 220 of the content reproduction apparatus 200 decrypts the encrypted part of the stereoscopic image data (S420), the display unit (not shown) outputs the contents of the stereoscopic image by using the unencrypted part of the stereoscopic image data and the decrypted part (S425).

For example, when the user authentication has been completed, the encrypted right eye image data R of the stereoscopic image data as shown in FIG. 5 is decrypted, and the unencrypted left eye image data L and the right eye image data R as shown in FIG. 6, may be obtained.

Accordingly, the content reproduction apparatus 200 may display the stereoscopic image by using the obtained unencrypted left eye image data L and the right eye image data R.

Meanwhile, in the S420, decryption information such as key or the like may be needed in order to decrypting the encrypted part, the decryption information may be provided from the content provider 100 to the content reproduction apparatus 200 when the user authentication has been successfully completed.

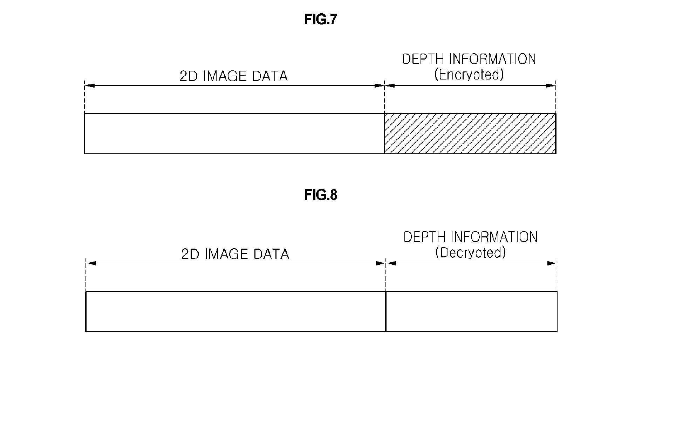

According to another embodiment of the present invention, as shown in FIG. 7, the stereoscopic image data received from the content provider 100 include the two-dimensional data and depth information, the depth information may have been encrypted.

For example, when the stereoscopic image is implemented by analyzing the two-dimensional image captured by a single-view to generate the left eye image and the right eye image, the depth information to determine whether each individual object and the background, and the like included in the two-dimensional image have a value of any depth in the stereoscopic image may be needed.

As described above, even when the stereoscopic image includes the two-dimensional data and encrypted depth information, the method for providing the stereoscopic image contents may be applied, as described with reference to FIGS. 3 to 6.

For example, the content reproduction apparatus 200 may display the contents of the 2D image by using the unencrypted the 2D image data of the stereoscopic image data received from the content provider 100 or display the 3D image by decrypting the encrypted depth information after the user authentication as described above when the user wants to display the 3D image.

That is, when the user authentication has been completed, the encrypted depth information of the stereoscopic image data as shown in FIG. 7 is decrypted, and the unencrypted two-dimensional image data and the depth information as shown in FIG. 8 may be obtained.

Accordingly, the content reproduction apparatus 200 may display the 3D image by using the obtained 2D image data and the depth information.

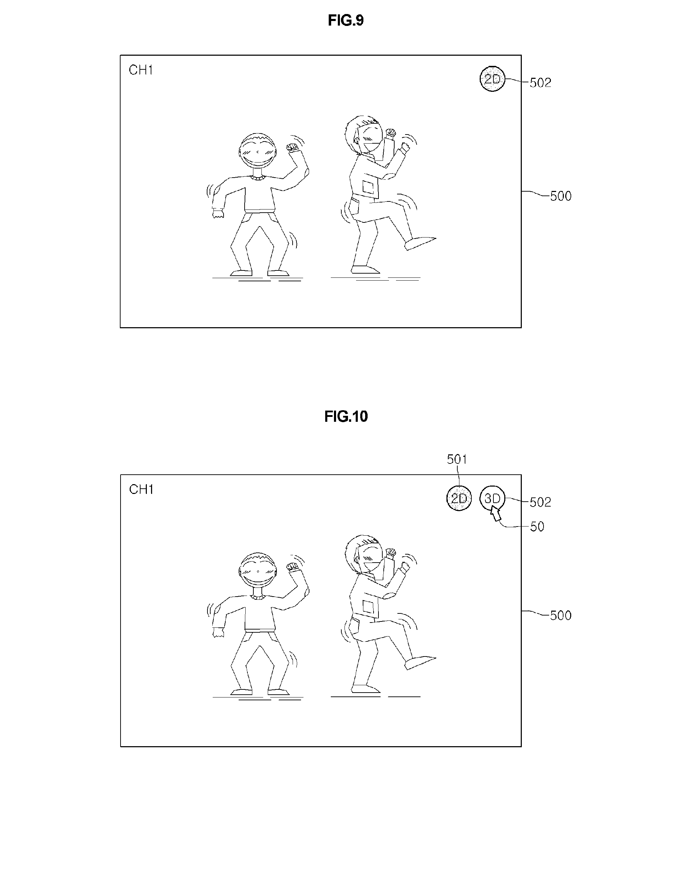

Hereinafter, referring to FIGS. 9 to 14, the first embodiment of a method for displaying the stereoscopic image by using the stereoscopic image data received from a content provider will be described in detail.

Referring to FIG. 9, the content reproduction apparatus 200 may display image of "CH1" by the two-dimensional image by using the content data received from a content provider 100.

In this case, the content data received from a content provider 100 may only include two-dimensional image data, or include partially encrypted stereoscopic image data.

In addition, whether the content data received from the content provider 100 can be watched by only the 2D image, including only the 2D image data, or whether the content data can be watched as the 3D image as well as the 2D image, including the partially encrypted stereoscopic image data may be displayed on the screen of the content reproduction apparatus 200.

For example, when the content data received from the content provider 100 includes only the 2D image data, a first icon 501 indicating that the user can watch the 2D image may be displayed on a screen 500 of the content reproduction apparatus 200, as shown in FIG. 9,

Meanwhile, when the content data received from the content provider 100 includes the partially encrypted stereoscopic image data, the first icon 501 indicating that the user can watch the 2D image and a second icon 502 indicating that the user can watch of the 3D image may be displayed on a screen 500 of the content reproduction apparatus 200, as shown in FIG. 10,

In addition, the first icon 501 may indicate that the 2D image is currently displayed on the content reproduction apparatus 200 by using a different color or brightness to distinguish itself from the second icon 502 and displaying as an active state.

For example, when the content data received from the content provider 100 includes the partially encrypted stereoscopic image data, any one of the left eye image data L and the right eye image data R may be encrypted, or the depth information included in the stereoscopic image data may be encrypted.

According to the first embodiment of the present invention, the user may request to display the contents by the 3D image while watching the contents received from the content provider 100 by the 2D image.

For example, the user may request to display the 3D image by a key button included in the content reproduction apparatus 200, or a remote control apparatus (not shown) for controlling the operation of the content reproduction apparatus 200.

In addition, as shown in FIG. 10, the user may request to display the 3D image by moving a pointer 50 indicated on the screen 500 of the content reproduction apparatus 200 and selecting the second icon 502 indicating that the user can watch the 3D image.

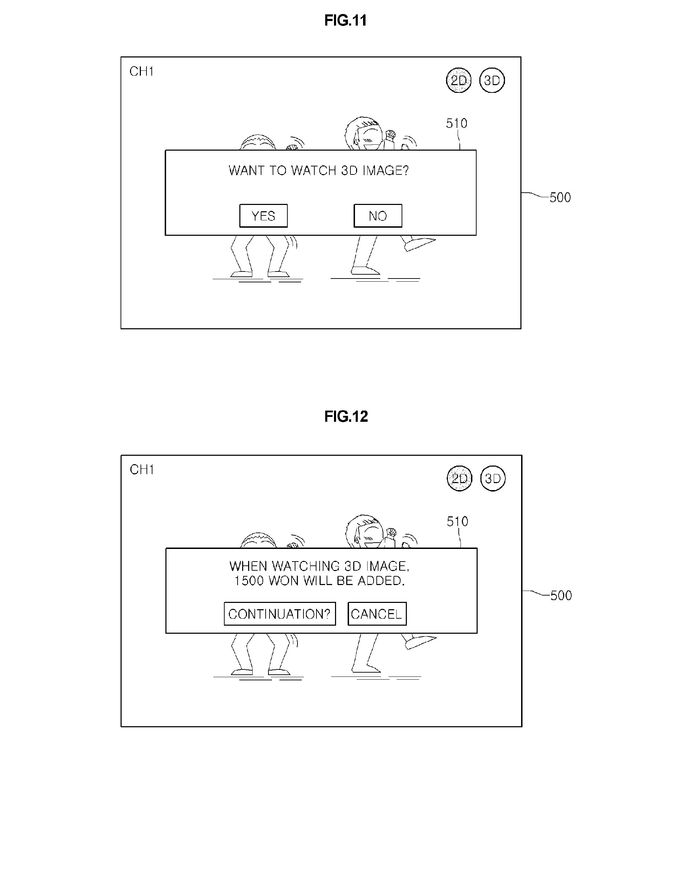

Referring to FIG. 11, when the user requests the display of the 3D image, a pop-up window 510 for confirming whether the user watches the 3D image may displayed on the screen 500.

When the user selects a "yes" button displayed on the pop-up window 510, as shown in FIG. 12, a fee which is charged to reproduce the contents received from the content provider 100 by the 3D image may be guided through the pop-up window 510.

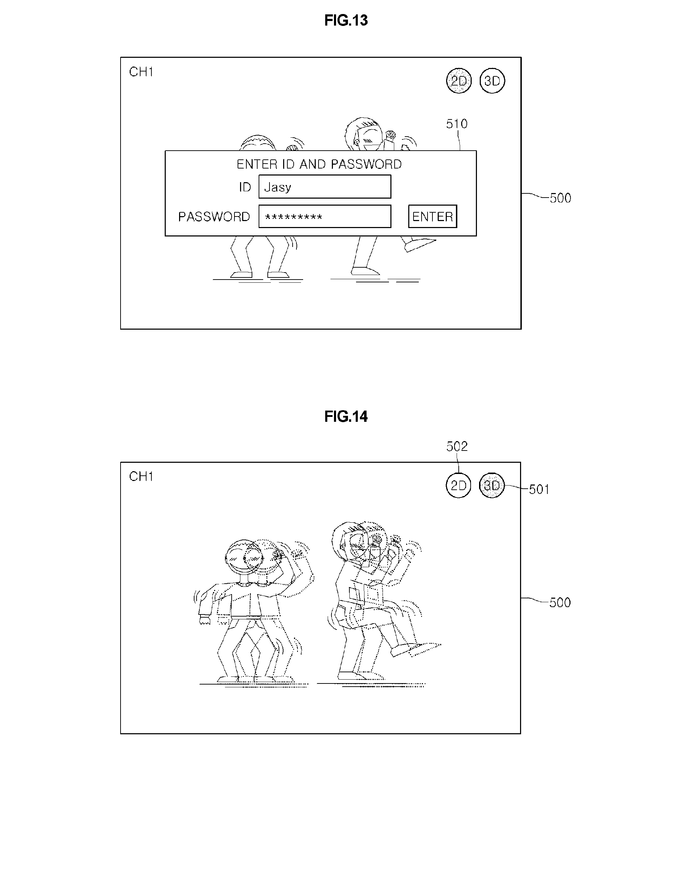

In addition, as shown in FIG. 13, for the user authentication regarding the provision of the 3D image, the user may input the user' ID and password through the pop-up window 510 displayed on the screen 500.

Based on the input user' ID and password, when the user authentication has been successfully completed, as shown in FIG. 14, the encrypted part (for example, any one of the left eye image data L and the right eye image data R, or the depth information) of the stereoscopic image data received from the content provider 100 is decrypted, and the contents may be displayed as the 3D image.

In this case, the second icon 502 may indicate that the 3D image is currently displayed on the content reproduction apparatus 200 by using a different color or brightness to distinguish itself from the first icon 501 to be displayed as an active state.

According to another embodiment of the present invention, even when the content data received from the content provider 100 includes only the 2D image data, the 3D image may be displayed by requesting the transfer of needed data for displaying the 3D image at the content provider 100 and receiving the needed data.

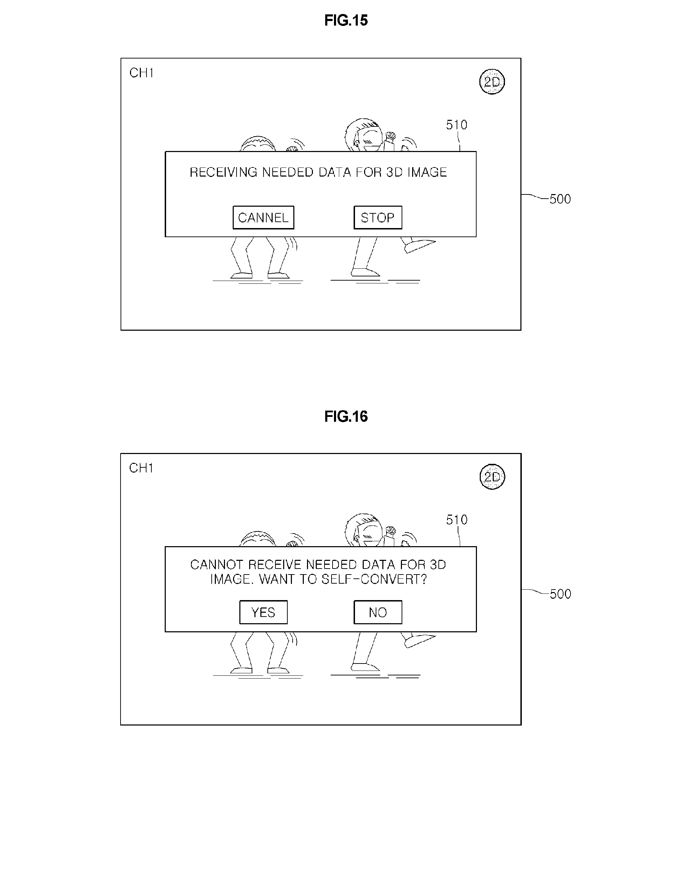

Hereinafter, referring to FIGS. 15 to 17, the second embodiment of a method for displaying the stereoscopic image by using the stereoscopic image data received from a content provider will be described in detail.

Referring to FIG. 15, in a state where only the 2D image is received from the content provider 100 and only the 2D image is displayed, when the user requests the display of the 3D image, the content reproduction apparatus 200 may receive the needed data for displaying the 3D image from the content provider 100 as in the case shown in FIG. 9.

For example, the content reproduction apparatus 200 can request the transfer of the left eye image data L and the right eye image data R corresponding to the contents at the content provider 100, or the transfer of depth information at the content provider 100.

In addition, when any one of the left eye image data L and the right eye image data R is currently received from the content provider 100 and the received image data is displayed as the 2D image, the content reproduction apparatus 200 can request the content provider 100 to transfer rest data that are not currently received.

For example, when the content reproduction apparatus 200 displays the 2D image by the left eye image data L received from the content provider 100, the transfer of the right eye image data R may be requested to the content provider 100.

Referring to FIG. 16, when the data that need to be transferred cannot be provided from the content provider, the content reproduction apparatus 200 can self-convert the 2D image data received from the content provider 100 into the 3D image according to a specific conversion type and display the 3D image.

As an embodiment of a method for converting the 2D image signal into the 3D image signal, a modified time difference (MTD) mechanism can be used.

According to the MTD mechanism, the content reproduction apparatus 200 may use any one image selected of images of a plurality of previous frames which make a pair with current images of the two-dimensional image signal.

The selected previous image by a frame which makes a pair with the current image is referred to as a delayed image, and whether images of any frame can be selected by the delayed image and whether the delayed image can be the left eye image or the right eye image can vary depending on movement velocities and directions.

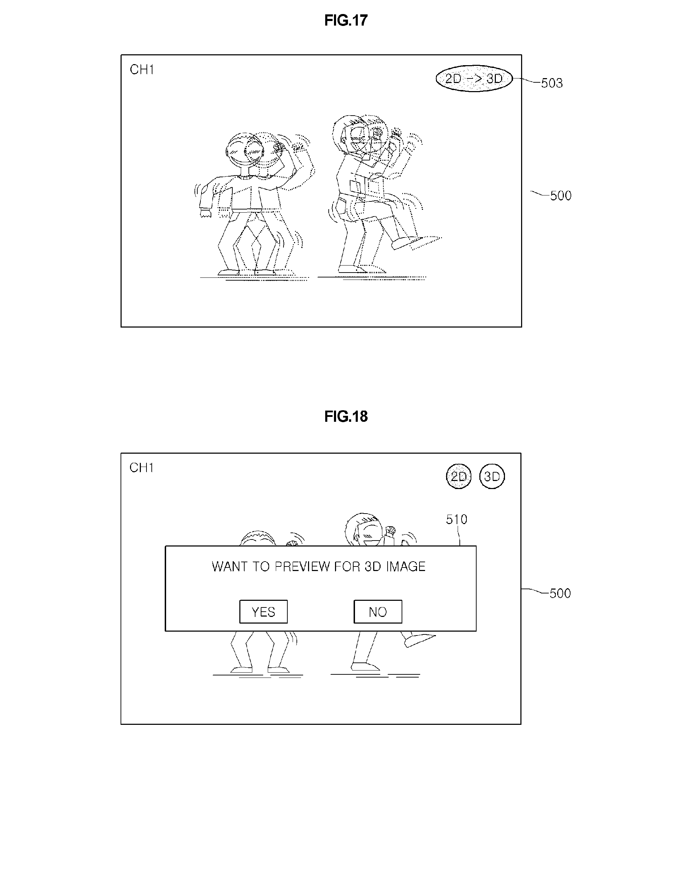

In this case, as shown in FIG. 17, a third icon 503 indicating that the 2D image data received from the content provider 100 is self-converted into the 3D image and displayed as the 3D image may be used.

According to another embodiment of the present invention, before the user authentication is performed, the content reproduction apparatus 200 can display the 3D image based on the stereoscopic image data provided from the content provider 100 through the preview during a predetermined time.

FIGS. 18 to 19 are diagrams showing a first embodiment of a method for providing a preview regarding 3D stereoscopic image.

Referring to FIG. 18, when the user requests that the user wants to watch corresponding contents as the 3D image while watching the 2D image, the corresponding contents may be displayed as the 3D image during the constant time without directly entering the user authentication step for a pay per use, etc.

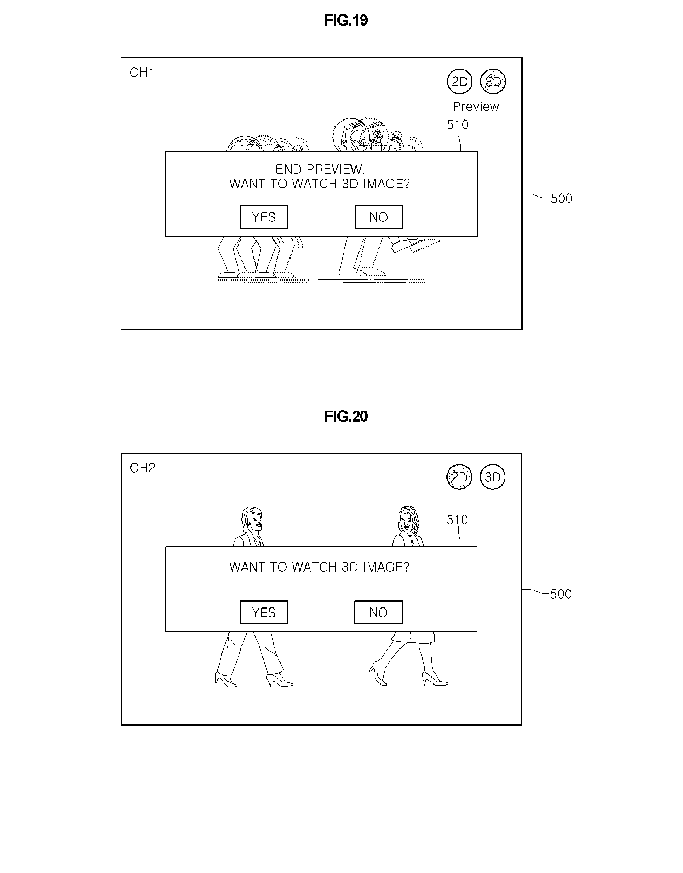

Accordingly, as shown in FIG. 19, the user can select whether the user wants to watch all the contents as the 3D image after confirming the preview of the 3D image to be displayed during the predetermined time.

Meanwhile, when the user selects to watch the 3D image after confirming the preview, the charging for the watching of the 3D image of the corresponding contents through the user authentication step as described above is achieved.

According to another embodiment of the prevent invention, when the broadcast channel is switched by the user while a specific broadcast channel is displayed as the 3D image, whether the switched broadcast channel can be also displayed can be set by the user.

FIGS. 20 to 21 are diagrams showing embodiments of a method for providing 3D stereoscopic image when switching a channel.

Referring to FIG. 20, the reception channel can be switched from "CH1"to "CH2" through the input of the user while displaying the image of "CH1" on the screen 500 as the 3D image by using the method as described with reference to FIGS. 3 to 19.

In this case, in response to the reception channel switching of from "CH1" to "CH2", a pop-up window 510 to be selected by the user who wants to watch the 3D image can be displayed on the screen 500 of the content reproduction apparatus 200.

For example, when the user changes the reception channel into "CH2" by using channel up/down buttons (not shown) or channel number input buttons included in the remote control apparatus (not shown), the pop-up window 510 confirming whether the user continually watches the image of the changed "CH2" as the 3D image is displayed on the screen 500, and the user can determine whether the 3D image for "CH.2" is displayed by selecting a "yes" button or a "no" button included in the pop-up window 510

For example, when the user presses a "confirmation" button (or any one of buttons corresponding to the "yes" button) included in the remote control apparatus (not shown) after confirming the pop-up window 510, the image of "CH2" may be displayed as the 3D image by using the method as described with reference to FIGS. 3 to 19.

In addition, when the user presses a "cancel" button (or any one of buttons corresponding to the "no" button) included in the remote control apparatus (not shown), the image of "CH2" may be displayed as the 2D image.

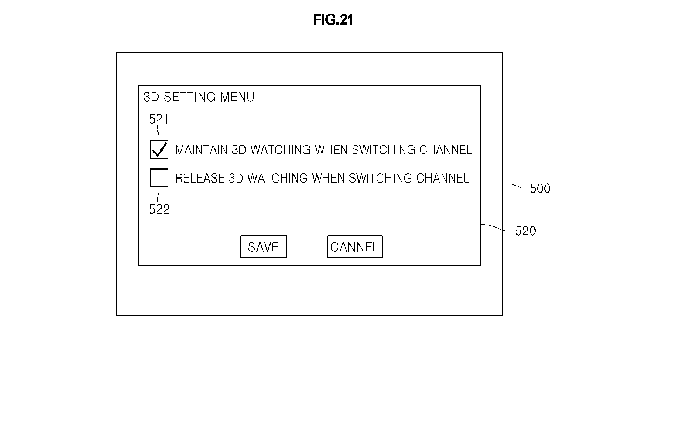

Referring to FIG. 21, when switching the channel, according to another embodiment of a method for setting whether the 3D image is output, a menu item for setting whether the 3D image is output, when switching the channel, may be provided to the user.

For example, when the reception channel is switched in a type of On Screen Display (OSD), a 3D setting menu widow 520, which allows the user to set whether the switching of the three-dimensional image signal is maintained, is displayed on the screen 500.

After the user requests the display of the 3D setting menu window 520 as shown in FIG. 21, the user can set whether the 3D watching is maintained or released when switching the channel by selecting any one of check boxes (521, 522) included in the 3D setting menu window 520.

If the user selects the first check box 521 and then selects "save" button when switching a channel in the user 3D setting menu window 520, the watching of the 3D stereoscopic image may be maintained when next switching of the reception channel.

In this case, as shown in FIG. 20, when switching the reception channel from the "CH1" to the "CH2", the image of the "CH2" is displayed as the 3D image through the user authentication or the like after the user authentication or the like according to pre-set user settings by using the 3D setting menu window 520, without displaying the separate pop-up menu window 510.

Meanwhile, if the user selects the second check box 522 for setting "3D watching release and then selects "save" button when switching a channel in the 3D setting menu window 520, the watching of the 3D stereoscopic image may be released when next switching of the reception channel.

According to another embodiment of the present invention, the 3D setting menu as described above may be provided such that the user can set the 3D watching maintenance state or release state for a plurality of items when switching the channel.

For example, the user can set the 3D watching maintenance state for each genre, each watching time, each watching class, each channel, and each user by using the 3D setting menu.

As described above, the present invention may be obtain an effect on an effective use of the stereoscopic image contents such that a variety of contents including the stereoscopic image may be selected and used to meet the user status.

The method for providing stereoscopic image contents according to the present invention can also be embodied as programs to be executable in a computer and be stored in a computer readable recording media. Examples of the computer readable recording media include read-only memory (ROM), random-access memory (RAM), CD-ROMs, magnetic tapes, floppy disks, optical data storage devices, and so on. Furthermore, it can be implemented as carrier waves (such as data transmission through the Internet).

The computer-readable recording medium are distributed on computer systems connected through the network, and thus the computer-readable recording medium may be stored and executed as the computer-readable code by a distribution scheme. In addition, function programs, codes and code segments for implementing the method may be easily deduced by programmers in the field of technology belong to the present invention.

In addition, although preferred embodiments of the present invention have been illustrated and described, the present invention is not limited to the above-mentioned embodiments and various modified embodiments can be available by those skilled in the art without the scope of the appended claims of the present invention. In addition, these modified embodiments should not be appreciated separately from technical spirits or prospects.

## Claims

1. A method of providing stereoscopic image by using data received from a contents provider, comprising:
receiving partially encrypted stereoscopic image data from the contents provider;
performing a user authentication for providing stereoscopic image;
decrypting the encrypted part of the stereoscopic image data based on the result of the performed user authentication; and
displaying stereoscopic image by using the stereoscopic image data including the decrypted part.

2. The method according to the Claim 1, further comprising:
displaying a 2D image by using an unencrypted part of the stereoscopic image data received to the content provider.

3. The method according to the Claim 1, the stereoscopic image data received to the content provider includes left eye image data and right eye image data, and any one of left eye image data and right eye image data is encrypted.

4. The method according to the Claim 3, further comprising:
displaying 2D image by using any one of unencrypted data of the left eye image data and right eye image data.

5. The method according to the Claim 1, the stereoscopic image data received to the content provider includes 2D image data, and additional information for displaying the stereoscopic image using the 2D image data, and the additional information is encrypted.

6. The method according to the Claim 5, wherein the additional information is depth information.

7. The method according to the Claim 5, further comprising:
displaying the 2D image by using 2D image data.

8. The method according to the Claim 1, further comprising:
receiving a user' input requesting that contents displayed into 2D image are displayed into the stereoscopic image.

9. The method according to the Claim 8, further comprising:
requesting transmission of necessary data to the content provider when the content data received to the content provider does not include the necessary data for displaying the stereoscopic image.

10. The method according to the Claim 9, further comprising:
receiving the requested transmission data from the content provider in the encrypted state.

11. The method according to the Claim 9, wherein in the requesting the transmission, transmission about at least one of information not included in the content data of the left eye image data and right eye image data, or deep information is requested.

12. The method according to the Claim 9, further comprising:
displaying by self-converting the 2D image according to the content data into stereoscopic image when the requested transmission data is not provided from the content provider.

13. The method according to the Claim 1, further comprising:
displaying the stereoscopic image over a preview during a predetermined time before the user authentication is performed.

14. An apparatus of providing stereoscopic image, comprising:
a data transceiver unit for receiving partially encrypted stereoscopic image data from the content provider and transmitting a user authentication data;
a memory unit for storing the received stereoscopic image data;
a decoder unit for decrypting the encrypted part of the stereoscopic image data based on the results of a performed user authentication by using the transmitted user authentication data; and
a display unit for displaying stereoscopic image by using the stereoscopic image data including the decrypted part.

15. The apparatus according to the Claim 14, the stereoscopic image data received to the content provider includes left eye image data and right eye image data, and any one of left eye image data and right eye image data is encrypted.
